# FASCICULE DE BREVET EUROPEEN

(11) **EP 0 475 328 B1**
(45) Date de publication et mention de la délivrance du brevet: **24.08.1994**
(21) Numéro de dépôt: 91115217.1
(22) Date de dépôt: 09.09.1991
(51) Int. Cl.: F16L 57/00, F16L 55/17

(54) **Dispositif permettant de limiter une fuite en cas de rupture d'une tuyauterie**
Vorrichtung zum Einschränken von Leckagen im Falle eines Rohrbruches
Device to limit leakage in case of pipe rupture

(30) Priorité: 13.09.1990 FR 9011338
(43) Date de publication de la demande: 18.03.1992
(73) Titulaire: ACB, 75116 PARIS (FR)
(72) Inventeur: Bioret, Bernard, F-44300 Nantes (FR)
(74) Mandataire: Weinmiller, Jürgen

(56) Documents cités:
- EP-A- 0 151 670
- DE-A- 3 334 836
- GB-A- 7 717
- GB-A- 2 197 420

## Description

La présente invention concerne un dispositif permettant de limiter une fuite en cas de rupture d'une tuyauterie.

En particulier, l'invention s'applique dans le cas où une tuyauterie contient un fluide sous forte pression et à haute température. En cas d'une rupture circonférentielle, par exemple à un point de faiblesse telle qu'une soudure, et compte tenu de la pression, les deux extrémités rompues peuvent battre en s'écartant l'une de l'autre axialement et latéralement de telle sorte que la section de fuite peut atteindre deux fois la section de la tuyauterie si les deux extrémités sont complètement décalées.

La présente invention a ainsi pour but d'éviter un tel phénomène en installant sur la tuyauterie aux points détectés d'une certaine faiblesse ou aux points où l'on peut avoir certaines craintes, un dispositif qui limite la fuite en cas de rupture de la tuyauterie.

Le document EP 0 151 670 décrit un dispositif permettant d'éviter la rupture d'une tuyauterie dans une zone à risque. Dans ce but, il est prévu de relier les deux parties situées de part et d'autre de la zone à protéger par des barres de tension.

Le dispositif a aussi pour but d'apporter le minimum de contrainte dans la conduite lors de son fonctionnement correct et dans le dispositif lui-même, de manière à ne pas le "fatiguer" et, bien entendu, il cherche à être le plus simple possible dans sa constitution, et son montage, et peu coûteux.

Ce dispositif est conçu pour pouvoir être mis en place après la fin de la construction de l'installation dont fait partie la tuyauterie.

Dans la suite du texte, et dans les revendications, on entend par tuyauterie, non seulement la conduite elle-même, mais aussi la partie d'un réservoir ou d'une capacité formant, par exemple, un embout pour son raccordement avec la conduite.

Ainsi, l'invention a pour objet un ensemble comprenant une tuyauterie et un dispositif monté sur la tuyauterie enjambant une section de la tuyauterie à protéger et destiné à éviter le décalage axial et radial des deux extrémités de conduite en cas de rupture de la tuyauterie au niveau de ladite section, ledit dispositif comprenant deux brides montées sur la tuyauterie, respectivement de part et d'autre de ladite section à protéger et assemblées l'une à l'autre par des moyens d'assemblage, des moyens étant prévus de façon à ce que chaque bride soit ancrée axialement sur la tuyauterie, caractérisé en ce que chaque bride est constituée de deux demi-colliers assemblés, et en ce que des organes élastiques, permettant une libre dilatation axiale de la tuyauterie, sont interposés dans lesdits moyens d'assemblage.

Avantageusement, afin d'interdire absolument tout désaxement de la tuyauterie en cas de rupture, les brides possèdent une portion d'emboîtement mutuel assurant un centrage.

Afin d'éviter la mise en pression des brides en cas de fuite, et pour permettre l'évacuation du fluide, au moins l'une des deux brides est percée de cheminées.

Selon une première réalisation, l'ancrage axial d'une bride est réalisé par au moins un jonc torique logé mi dans une gorge de la tuyauterie, mi dans une gorge de la bride.

Selon une seconde réalisation, l'ancrage d'une bride est réalisé par le moyen d'un rebord s'appuyant contre un épaulement de la tuyauterie.

Selon le cas, l'ancrage des deux brides est réalisé par jonc ou bien, l'un par jonc et l'autre par rebord et épaulement. Ce dernier cas s applique en particulier, mais pas nécessairement, à la liaison d'une conduite à une capacité ou un réservoir où généralement la liaison est effectuée par l'intermédiaire d'un embout appartenant au réservoir et dont la paroi est épaisse, plus épaisse que celle de la conduite et où il est donc possible d'effectuer une gorge suffisante pour réaliser un épaulement. En revanche, sur la tuyauterie proprement dite, le système utilisé est l'ancrage par joncs qui présente l'avantage d'enlever très peu de matière sur la tuyauterie et ainsi de ne pas affaiblir, ou très peu, sa résistance.

Selon une autre caractéristique, il existe un jeu radial entre le diamètre extérieur de la tuyauterie et le diamètre intérieur d'une bride, en tout point de la longueur de la bride, de manière à ne pas créer de contraintes dues aux dilatations différentielles entre la tuyauterie et les brides.

On va maintenant donner la description d'un exemple de mise en oeuvre de l'invention en se reportant au dessin annexé dans lequel :

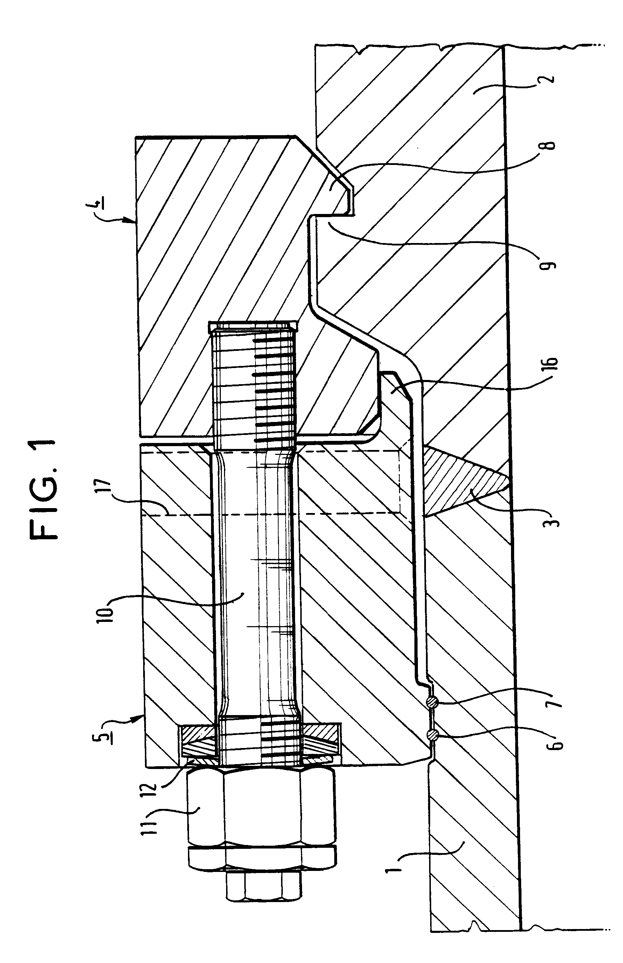

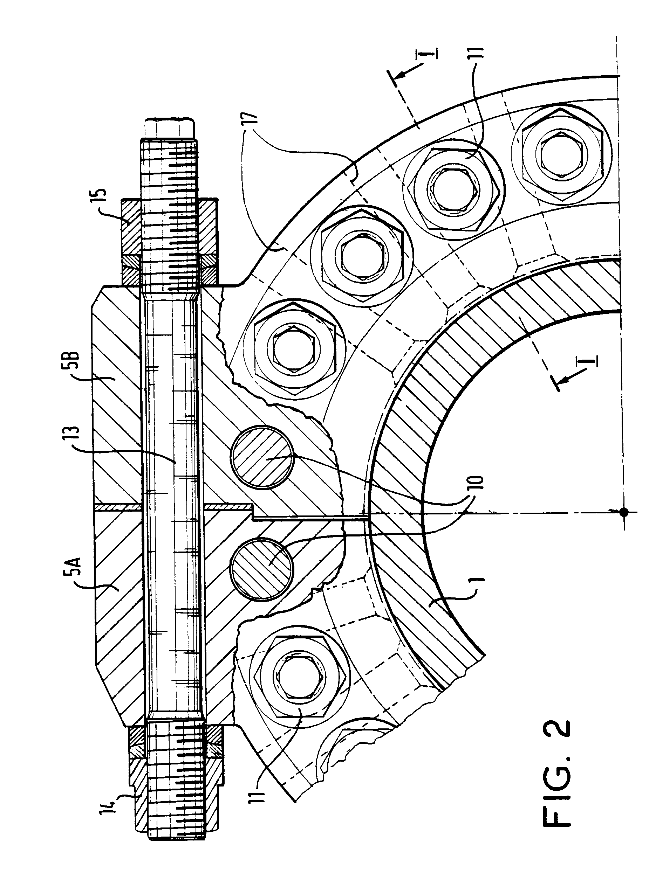

La figure 1 montre le dispositif selon l'invention en coupe partielle longitudinale selon I-I de la figure 2.

La figure 2 est une vue de gauche de la figure 1 avec arrachement partiel et coupe de la tuyauterie.

En se reportant à ces deux figures, on voit une tuyauterie se composant d'une conduite proprement dite 1 et d'un embout 2 auquel la conduite est liée par une soudure 3. Cet embout 2 fait partie, par exemple, d'une capacité ou d'un réservoir et permet précisément son raccordement à une conduite.

De part et d'autre de la soudure 3 sont disposées deux brides : bride 4 à droite, et bride 5 à gauche. La bride 5 est ancrée axialement sur la tuyauterie par le moyen de deux joncs 6 et 7 qui sont logés chacun à moitié dans une gorge de la tuyauterie et à moitié dans une gorge de la bride 5. A droite, la bride 4 est ancrée axialement sur la tuyauterie par le moyen d'un rebord 8 prenant appui contre un épaulement 9 de la tuyauterie.

Les deux brides 4 et 5 sont assemblées axialement par des tirants 10 et écrous 11 avec interposition de rondelles élastiques 12 permettant une libre dilatation axiale de la conduite sans provoquer de contraintes néfastes et évitant un éventuel desserrage des écrous sous l'effet de vibrations transmises par la tuyauterie. Ainsi, à froid, le serrage des écrous 11 est tel que les rondelles élastiques 12 ne sont pas complètement écrasées. En fonctionnement normal, les contraintes dans la tuyauterie sont ainsi très faibles.

Pour permettre le montage des brides, chacune est constituée de deux demi-colliers 5A, 5B assemblés par des tiges filetées 13 et écrous 14, 15.

La bride 5 possède une collerette 16 sur laquelle vient s'emboîter la bride 4 réalisant ainsi un centrage qui interdit tout désaxement de la conduite en cas de rupture de la soudure 3.

Pour éviter, en cas de rupture de la soudure 3, et donc de fuite, de mettre en pression l'intérieur des brides, la bride 5 est percée de cheminées 17 qui permettent le dégagement du fluide.

Pour qu'en fonctionnement normal de la conduite, c'est-à-dire en l'absence de fuite, on ne crée aucune contrainte sur la conduite, ou tout au moins le moins possible, il existe un jeu radial entre le diamètre extérieur de la tuyauterie et le diamètre intérieur des brides, et ce, sur les deux brides et sur toute leur longueur, permettant ainsi une libre dilatation différentielle des brides et de la tuyauterie.

Dans l'exemple décrit, le dispositif est disposé au droit d'une soudure 3, cependant un tel dispositif peut être placé à n'importe quel endroit d'une tuyauterie où l'on peut craindre une faiblesse.

De la même façon, si l'on se trouve, non pas comme dans le cas décrit, au raccord d'une conduite 1 avec un embout 2 de raccordement à une capacité, mais le long de la conduite elle-même, les deux brides 4 et 5 sont alors ancrées de préférence par des joncs tels que 6 et 7 qui nécessitent que peu d'enlèvement de matière sur la conduite.

Le dispositif de l'invention est efficace et très simple. Il est facilement et rapidement monté, ou démonté pour permettre, par exemple, de faire un contrôle par ultra-sons de la soudure.

Le dispositif peut également être installé, non pas le long d'une tuyauterie, mais sur une capacité ou un appareil.

## Revendications

1. Ensemble comprenant une tuyauterie (1, 2) et un dispositif monté sur la tuyauterie enjambant une section (3) de la tuyauterie à protéger et destiné à éviter le décalage axial et radial des deux extrémités de conduite en cas de rupture de la tuyauterie au niveau de ladite section, ledit dispositif comprenant deux brides (4, 5) montées sur la tuyauterie, respectivement de part et d'autre de ladite section (3) à protéger et assemblées l'une à l'autre par des moyens d'assemblage (10, 11), des moyens (6, 7, 8, 9) étant prévus de façon à ce que chaque bride soit ancrée axialement sur la tuyauterie, caractérisé en ce que chaque bride est constituée de deux demi-colliers (5A, 5B) assemblés, et en ce que des organes élastiques (12), permettant une libre dilatation axiale de la tuyauterie, sont interposés dans lesdits moyens d'assemblage.

2. Ensemble selon la revendication 1, caractérisé en ce que les brides possèdent une portion d'emboîtement mutuel (16) assurant un centrage interdisant un désaxement de la tuyauterie en cas de rupture de ladite section.

3. Ensemble selon la revendication 2, caractérisé en ce que, au moins l'une des deux brides est percée de cheminées (17).

4. Ensemble selon l'une des revendications 1 à 3, caractérisé en ce que l'ancrage axial d'une bride est réalisé par au moins un jonc torique (6, 7) logé, mi dans une gorge de la tuyauterie, mi dans une gorge de la bride.

5. Ensemble selon l'une des revendications 1 à 3, caractérisé en ce que l'ancrage d'une bride est réalisé par le moyen d'un rebord (8) s'appuyant contre un épaulement (9) de la tuyauterie.

6. Dispositif selon l'une des revendications 4 ou 5, caractérisé en ce qu'il existe un jeu radial entre le diamètre extérieur de la tuyauterie et le diamètre intérieur d'une bride, en tout point de la longueur de la bride.

## Patentansprüche

1. Aus einer Rohrleitung (1, 2) und einer Vorrichtung bestehende Einheit, wobei die Vorrichtung auf die Rohrleitung aufgesetzt ist und einen Abschnitt (3) der zu schützenden Rohrleitung überbrückt und dazu bestimmt ist, die axiale und seitliche Verschiebung der beiden Enden der Leitung im Fall eines Bruchs der Rohrleitung in Höhe dieses Abschnitts zu vermeiden, wobei die Vorrichtung zwei auf der Rohrleitung angeordnete Flansche (4, 5) zu beiden Seiten des zu schützenden Abschnitts aufweist, die durch Montagemittel (10, 11) aneinander montiert werden, wobei solche Mittel (6, 7, 8, 9) vorgesehen sind, daß jeder Flansch axial auf der Rohrleitung verankert ist, dadurch gekennzeichnet, daß jeder Flansch aus zwei Halbringen (5A, 5B) zusammengefügt ist, und daß elastische Organe (12), die eine freie axiale Ausdehnung der Rohrleitung erlauben, in die Montagemittel eingefügt sind.

2. Einheit nach Anspruch 1, dadurch gekennzeichnet, daß die Flansche einen Bereich gegenseitigen Ineinanderfügens (16) besitzen, der eine Zentrierung bewirkt und eine Achsverschiebung im Fall eines Bruchs dieses Abschnitts verhindert.

3. Einheit nach Anspruch 2, dadurch gekennzeichnet, daß mindestens einer der beiden Flansche Schächte (17) aufweist.

4. Einheit nach einem der Ansprüche 1 bis 3, dadurch gekennzeichnet, daß die axiale Verankerung eines Flanschs durch mindestens einen Torusring (6, 7) geschieht, der halb in einer Kehle der Rohrleitung, halb in einer Kehle des Flansches angeordnet ist.

5. Einheit nach einem der Ansprüche 1 bis 3, dadurch gekennzeichnet, daß die Verankerung eines Flansches mittels eines Rands (8) erfolgt, der sich gegen eine Schulter (9) der Rohrleitung anlegt.

6. Vorrichtung nach einem der Ansprüche 4 oder 5, dadurch gekennzeichnet, daß ein axiales Spiel zwischen dem Außendurchmesser der Rohrleitung und dem Innendurchmesser eines Flansches an jedem Punkt der Länge des Flansches verbleibt.

## Claims

1. An assembly comprising pipework (1, 2) and a device mounted on the pipework straddling a section (3) of the pipework to be protected and designed to avoid any axial or radial offset between the two duct ends in the event of rupture of the pipework within said section, said device comprising two flanges (4, 5) mounted on the pipework, on respective sides of said section (3) to be protected and assembled to each other by assembly means (10, 11), the means (6, 7, 8, 9) being provided in a manner such that each flange is secured axially on the pipework, the assembly being characterized in that each flange is constituted by two half-collars (5A, 5B) that are assembled together, and in that resilient members (12), leaving the pipework free to expand axially, are interposed in said assembly means.

2. An assembly according to claim 1, characterized in that the flanges include mutually-engaging portions (16) for performing centering and for preventing the axes of the pipework becoming offset in the event of a rupture in said section.

3. An assembly according to claim 2, characterized in that at least one of the two flanges is pierced by chimneys (17).

4. An assembly according to any one of claims 1 to 3, characterized in that a flange is secured axially by means of at least one O-ring (6, 7) received half in a groove in the pipework and half in a groove in the flange.

5. An assembly according to any one of claims 1 to 3, characterized in that a flange is secured by means of a rim (8) bearing against a shoulder (9) on the pipework.

6. A device according to claim 4 or 5, characterized in that radial clearance is provided between the outside diameter of the pipework and the inside diameter of a flange, at all points around the flange.
